# DEMANDE DE BREVET EUROPEEN

(11) **EP 0 881 810 A1**
(43) Date de publication de la demande: **02.12.1998**
(21) Numéro de dépôt: 98201684.2
(22) Date de dépôt: 20.05.1998
(51) Int. Cl.: H04M 1/02

(54) **Radiotéléphone portable formé d'une partie principale et d'une partie pivotante**

(30) Priorité: 27.05.1997 FR 9706465
(71) Demandeur: Koninklijke Philips Electronics N.V., 5621 BA Eindhoven (NL)
(72) Inventeur: van Lerberghe, Steven, 75008 Paris (FR)
(74) Mandataire: Chaffraix, Jean

(57) **Abrégé**

Ce dispositif portable est formé :
- d'une partie principale (1) comportant un premier transducteur sonore électrique (19) et un clavier à touches (2, 3...,) et,
- d'une partie pivotante (25) comportant :
   . des moyens d'articulation (30) pour s'articuler autour de la partie principale entre une position dépliée et une position rabattue,
   . un deuxième élément transducteur (27).

La partie pivotante (25) est munie d'une ouverture pour qu'en position rabattue les touches du clavier soient accessibles à l'utilisateur.

Application : radiotéléphones

## Description

L'invention concerne un dispositif portable, radiotéléphone portable notamment, formé :
- dune partie principale comportant un premier transducteur sonore électrique et un clavier à touches et,
- d'une partie pivotante comportant :
   . des moyens d'articulation pour s'articuler autour de la partie principale entre une position dépliée et une position rabattue,
   . un deuxième élément transducteur.

Une telle invention trouve d'importantes applications, notamment dans le domaine des radiotéléphones mobiles qui impliquent l'utilisation de dispositifs de taille relativement petite et qui sont destinés à accompagner l'utilisateur dans tous ses déplacements. Cette taille est si petite qu'elle ne correspond plus à la distance oreille bouche d'un être humain. Il a donc été necessaire de disposer le microphone sur la partie pivotante tandis que l'écouteur demeure sur la partie principale. Ainsi en dépliant la partie pivotante, on obtient une distance écouteur-microphone qui est plus proche du gabarit humain.

Un dispositif de ce genre est décrit dans le modèle d'utilité allemand n° G 94 05 561.0. Ce dispositif comporte une partie pivotante sur laquelle est prévue une lame. Cette lame vient obstruer le clavier lorsque la partie pivotante est en position rabattue. Ceci est désavantageux lorsque la prise de communication est déclenchée, pour des raisons de commodité, par l'ouverture de la partie pivotante. L'utilisateur ne peut plus, alors, effectuer de commande de programmation, par exemple, sur son clavier sans prendre la ligne.

La présente invention propose un appareil du genre mentionné dans le préambule qui ne présente pas l'inconvénient précité.

Pour cela, un tel appareil est remarquable en ce que la partie pivotante est munie d'une ouverture pour qu'en position rabattue les touches du clavier soient accessibles à l'utilisateur

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre selon une vue de profil, les deux positions de la partie pivotante faisant partie du dispositif de la figure 1.
La figure 3 montre comment ladite partie pivotante vient se clipper sur la partie principale du dispositif de la figure 1.
La figure 4 montre comment le dispositif de la figure 1 peut se fixer sur un vêtement.
La figure 5 montre le système de blocage de la partie pivotante.
La figure 6 montre une vue en coupe de ce système de blocage.

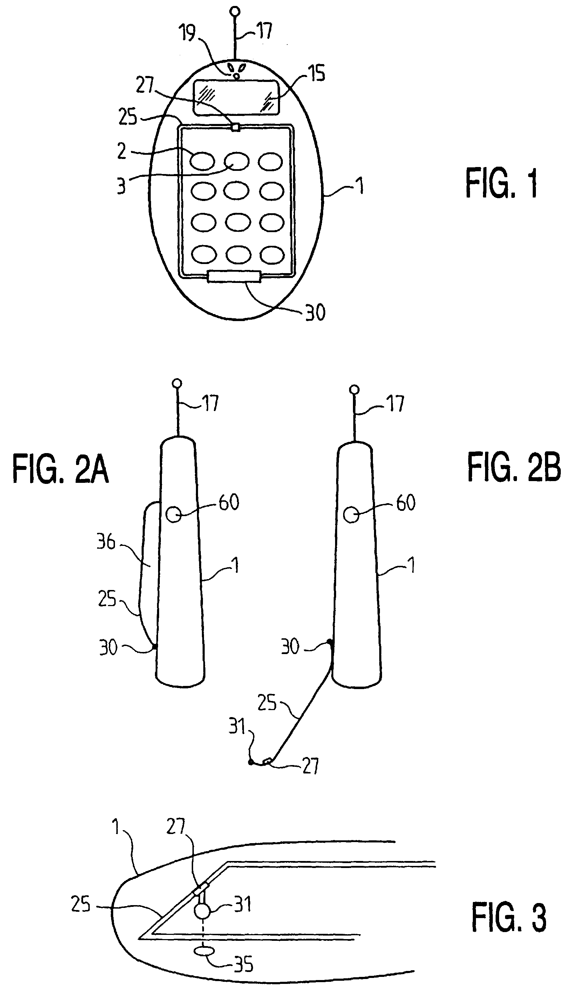

A la figure 1, on a représenté un dispositif conforme à l'invention. Il comporte un boîtier 1 qui constitue sa partie principale sur laquelle sont disposés : un clavier formé des touches 2, 3,..., un écran 15, une antenne 17 et un premier élément transducteur 19 qui est un écouteur. Le dispositif comporte également une partie pivotante 25 formée d'une tringle qui ménage une large ouverture sur les touches lorsqu'elle est en position rabattue. La position rabattue est celle qui est montrée sur la figure 1. La figure 2, en A, montre de profil le dispositif de l'invention dans cette même position rabattue. Sur cette tringle est fixé un autre élément transducteur 27 (un microphone) qui vient au niveau de la bouche de l'utilisateur lorsque cette partie pivotante, dont le mouvement est défini par une charnière 30, passe en position dépliée, comme cela est montré en B à la figure 2.

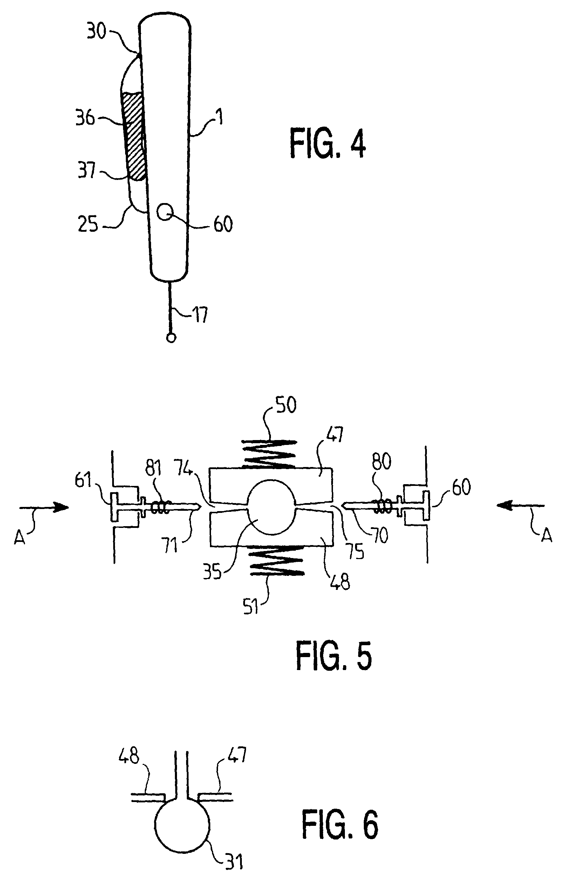

Cette partie pivotante 25 est munie d'une protubérance 31 qui vient s'encastrer dans une ouverture 35, de la manière indiquée par la figure 3. Cette partie pivotante laisse un certain jeu 36 de sorte que, lorsqu'elle est en position rabattue, il devient possible de coincer un vêtement 37 de l'utilisateur, par exemple une ceinture ou la partie de vêtement qui relie le devant et l'arrière d'un maillot de bain. Ceci est montré à la figure 4.

La figure 5 représente le système de blocage de la partie pivotante. L'ouverture 35 est ménagée dans l'intérieur de deux parties de blocage 47 et 48 maintenues serrées à l'aide de ressort 50 et 51 qui les pressent l'une contre l'autre. Ainsi, la protubérance mise en force dans cette ouverture se trouve coincée et assure donc le blocage de la partie pivotante. Pour pouvoir débloquer cette partie, on a prévu une commande de déblocage formée de deux boutons-poussoirs 60 et 61 disposés sur les faces latérales du dispositif. Par une poussée exercée sur ces boutons-poussoirs dont le sens est indiqué par les flèches A, des picots 70 et 71, solidaires respectivement des boutons 60 et 61 s'engagent dans les fentes 74 et 75 formées par une découpe des parties 47 et 48. Cette poussée fait écarter les parties de blocage 47 et 48 et libère de ce fait la protubérance 31. Des ressorts de rappels 80 et 81 ramènent à leur position d'origine les boutons-poussoirs.

La figure 6 montre une vue en coupe de ce système de blocage. Une fois les parties 47 et 48 pressées l'une contre l'autre, l'ouverture 35 délimitée par ces pièces 47 et 48 a une dimension inférieure à celle de la protubérance 31. Ceci l'empêche donc de s'échapper.

## Revendications

1. Dispositif portable, radiotéléphone portable notamment, formé :
- d'une partie principale comportant un premier transducteur sonore électrique et un clavier à touches et,
- d'une partie pivotante comportant :
. des moyens d'articulation pour s'articuler autour de la partie principale entre une position dépliée et une position rabattue,
. un deuxième élément transducteur,
caractérisé en ce que la partie pivotante est munie d'une ouverture pour qu'en position rabattue les touches du clavier soient accessibles à l'utilisateur.

2. Dispositif selon la revendication 1, caractérisé en ce qu'il est prévu un système de blocage de la partie pivotante lorsqu'elle est en position rabattue.

3. Dispositif selon la revendication 2, caractérisé en ce que le système de blocage comporte une commande de déblocage formée par au moins un bouton-poussoir.

4. Dispositif selon la revendication 3, caractérisé en ce que les boutons-poussoirs sont disposés latéralement sur sa partie principale.

5. Dispositif selon l'une des revendications 1 à 4 caractérisé en ce que la partie pivotante est formée à partir d'une tringle.

6. Dispositif selon l'une des revendication 1 à 5 caractérisé en ce que la partie pivotante permet de l'accrocher sur un vêtement.
